Europäisches Patentamt

European Patent Office

Office européen des brevets

(11) Publication number: **0 092 326**

**B1**

(12) **EUROPEAN PATENT SPECIFICATION**

(45) Date of publication of patent specification: **27.08.86**

(21) Application number: **83301748.6**

(22) Date of filing: **29.03.83**

(51) Int. Cl.⁴: **G 03 G 15/00**

(54) **Electrophotographic reproducing machine.**

(30) Priority: **08.04.82 JP 58523/82**
**08.04.82 JP 58524/82**
**08.04.82 JP 58525/82**
**08.04.82 JP 58526/82**
**08.04.82 JP 58527/82**
**08.04.82 JP 58528/82**
**08.04.82 JP 58529/82**
**08.04.82 JP 58530/82**
**08.04.82 JP 58531/82**
**08.04.82 JP 58532/82**

(43) Date of publication of application:
**26.10.83 Bulletin 83/43**

(45) Publication of the grant of the patent:
**27.08.86 Bulletin 86/35**

(84) Designated Contracting States:
**DE FR GB**

(56) References cited:
**EP-A-0 068 872**
**DE-A-2 305 684**
**DE-C-2 528 407**

(73) Proprietor: **KONISHIROKU PHOTO INDUSTRY
CO. LTD.
No. 26-2, Nishishinjuku 1-chome Shinjuku-ku
Tokyo 160 (JP)**

(72) Inventor: **Kawata, Shun
No. 1-21-1, Daida Setagaya-ku
Tokyo (JP)**
Inventor: **Nosaka, Isao
No. 1074-108, Katakura-Cho
Hachioji-Shi Tokyo (JP)**
Inventor: **Katakura, Hiroshi
No. 1-1-1, Nishihara-Cho
Fuchu-Shi Tokyo (JP)**

(74) Representative: **Wood, Anthony Charles et al
c/o MICHAEL BURNSIDE & PARTNERS 2
Serjeants' Inn Fleet Street
London EC4Y 1HL (GB)**

Courier Press, Leamington Spa, England.

## Description

This invention relates to an electrophotographic reproducing machine.

In conventional electrophotographic reproducing machines, a metal shield plate is mounted at the upper portion of a machine frame which accommodates therein a photosensitive drum and a plurality of process units, so that the shield plate and the upper portion of the machine frame constitute a housing for an exposure optical system. A movable mount for the exposure optical system is fitted on guide rails fixed to the upper inner face of the machine frame, and a document glass is fixedly mounted on the upper surface of the machine frame.

The assembly line for manufacture of this conventional machine structure is very long, since various components of the exposure optical system are mounted onto the machine frame, and this leads to disadvantages, such as an enlargement of the assembly line and a prolonged delivery time.

Further, a light beam radiated from an exposure lamp can leak through gaps between metal plates, and this requires an additional working step to prevent such leakage. Heat within the housing is radiated to the peripheral surface of the photosensitive drum by the metal shield plate, so that the photosensitive drum will quickly deteriorate. At the same time, due to reduced air convection within the housing, the temperature within the housig will increase, leading to many problems.

Moreover, the housing will also contain a lens mounting frame extending transversely of the machine frame, rails fixed to the inner side face of the machine frame for guiding the movable mount for the exposure optical system, and a light shield fixed on the upper face of the shield plate to interrupt external light. The manufacturing cost of the housing is high because of the large number of parts, and adjustment as well as shield processing becomes intricate due to unavoidable errors in machining and assembly of the many component parts. With this, it is difficult to achieve reduction in unit manufacturing costs through mass production. Further, the housing for the exposure optical system is required to be assembled onto the machine frame which is running forward on the assembly line, so it is also difficult to preassemble the exposure optical system.

The movable mount for conventional electrophotographic reproducing machines, can include a current collector in sliding contact with a stationary electrode plate in order to supply current to an exposure lamp and other parts. The prior current collector includes a coil spring interposed between a current-supplying metal plate and a current-collecting brush, whereby to effect electrical contact. This produces many problems, such as early fatigue of the coil spring due to its heating, occurrence of noise and failure of conduction.

Moreover, when feeding electrical power to a lamp on the movable mount current-collection usually involves an electrode line laid along running rails for the mount through an insulating base plate, such that a current-collecting brush on the movable mount is brought into sliding-contact with the electrode line. However, the electrode line in this prior art construction is formed of a long and narrow printed board or the like, and this printed board is fixed to the running rails for the movable mount, thus resulting in an intricate assembly process.

Moreover, the document glass must be held precisely in parallel to the optical axis of the exposure optical system. In the past, the document glass has been seated in an upper flange of a machine frame constituting a housing for the exposure optical system onto which components of the exposure optical system are mounted, so that it is difficult to hold the aforesaid precise parallel relationship by directly seating the document glass in the upper flange, because of limits in machining accuracy. For this reason, when mounting the document glass on the machine frame, a spacer of appropriate thickness has heretofore been interposed between the upper flange and the document glass, whereby to attain the aforesaid parallel relationship. Such adjustment at the time of assembly requires great skill and intricate work, however, and is therefore not suitable for mass production.

Furthermore, as well known, in an exposure optical system, a lens plate is disposed in the transverse direction within a shield box and a mounting flange of a projection lens is screwed to the lens plate.

Manufacturing variations in individual projection lenses means particularly, that their resolving power for an image can take various values, depending on directions within the image. Thus, the above mentioned structure cannot ensure that a portion of the projection lens having the highest resolving power is utilized for an elongated image having passed through a slit.

Also, as well known, focus adjustment of the projection lens is carried out using a spacer having an appropriate thickness which is interposed between the projection lens and the lens plate. In such conventional focus adjustment, however, mounting screws have to be loosened whenever spacers of different thickness are inserted, and this results in intricate adjustment. Further, since the mounting screws are fastened in a direction corresponding to the depthwise direction of the spacer, the projection lens can be moved along its optical axis during the fastening process, and such adjustment work requires great skill.

In addition, an exposure optical system generally includes a shield box for shielding from external light a light beam having passed through the projection lens, and the shield box has mounted therein a mirror adapted to reflect the incident light from the projection lens toward a photosensitive drum.

Heretofore, an all-metal frame has usually been employed, so it was inevitable, for example, that there should be some errors in the distance between the mounting for a barrel of the projection lens and the mounting for the reflection mirror, and a fairly large amount of time is required for adjustment of this error. This results from errors in dimensions of the metal frame and in mounting thereof, so that the metal frame itself cannot contribute to adjustment of errors. There is also known a mounting structure for the reflection mirror such that the mounting surface of the shield box is finished to a mirror surface and then the mirror is seated on the mounting surface. But it is very difficult to finish precisely the mounting surface with respect to the optical axis of the projection lens as well as provide a precise relationship between the optical axis and the photosensitive drum. Therefore, a spacer or the like has to be interposed between the mounting surface and the mirror, thereby to secure satisfactorily accuracy in positional relationships, but this adjustment is intricate, requiring special skills and much time.

Meanwhile, the shield box is constituted by metal plates disposed on a shield plate at the bottom portion of a housing for the exposure optical system. A top plate of the shield box is formed of a draw lid so as to allow a mirror mounted within the shield box to be cleaned.

However, such conventional structure has encountered a difficulty in providing complete shielding between the shield box body and the draw lid. Penetration of stray light from outside after regular assembly requires additional machining work to achieve complete shielding. Since the shield box must undergo plate work, manufacturing costs are greatly increased.

Further, as mentioned above, in conventional electrophotographic reproducing machines, a metal shield plate is mounted at the upper portion of a machine frame which accommodates a photosensitive drum and a plurality of process units, so that the shield plate wnd the upper portion of the machine frame constitute a housing for an exposure optical system. A movable mount for the exposure optical system is fitted on guide rails fixed to the upper portion of the machine frame, and a document glass is fixedly mounted on the upper surface of the machine frame.

Assembly and adjustment work on such machine structure, however, is very intricate and hence manufacturing costs are greatly increased. In order to solve this problem, it may be advisable for the housing to be resin-moulded, but this leads to another problem in making the optical axis of the machine frame coincide with that of the housing.

It is an object of this invention to eliminate the above-mentioned problems such as excessive length of the assembly line, early deterioration of the photosensitive drum and overheating within the housing which have been encountered in conventional reproducing machines, and also considerably to reduce the number of parts of the housing.

Another object of this invention is to provide an integrally formed housing for the exposure optical system from resin, which permits the exposure optical system to be preassembled in a separate assembling line from that for the maching frame, which has cheaper manufacturing costs as a result of the reduced number of parts, and which can permit mass production.

This invention provides an electrophotographic reproducing machine with a housing for an exposure optical system, which accommodates therein a slit plate for scanning, an exposure lamp and a projection lens, the housing being formed of heat insulating resin and having an integral dish-like form with vent holes in its peripheral walls for promoting ventilation within said machine, its bottom portion serving also as a heat insulating plate, the housing being mounted on an upwardly open machine frame which accommodates therein a plurality of process units for reproducing, and a document glass being mounted by means of glass-mounting plates at the top portion of said housing.

One embodiment of this invention provides a current collector wherein a keyhole-like slot is formed at one side of a current-supplying metal plate to which is connected one end of a lead wire, a current-collecting brush is fixed at the other end of the lead wire with a coil spring fitted therearound, the lead wire is passed through the keyhole-like slot with the coil spring in its compressed state, and the current-supplying metal plate is incorporated in an insulation block.

Another embodiment provides a current-collecting structure such that the glass-supporting plate is formed of an electrically insulating resin, an electrode plate is attached to its bottom surface, and power is fed to the movable mount through the electrode plate.

Another embodiment avoids intricate adjustment by a construction in which three posts with high positional accuracy are provided in the housing as a three-point support, a glass supporting plate is mounted on these three posts and a document glass is seated on the glass supporting plate.

In another embodiment, the lens for focusing the elongated image having passed through a slit is mounted on the stationary portion of the machine, by boring threaded holes in mounting seats having a pair of receiving faces constituting a V-shape of cradle for the peripheral wall of a cylindrical lens rotatable about its optical axis, and the lens is fixed in position with the aid of the threaded holes and a holding band. In a variation of this embodiment, an adjusting spacer is interposed between the mounting face on the stationary portion of the machine and the end face of the cylindrical lens.

Another embodiment of this invention makes use of the fact that current resin-forming technology can ensure dimensional accuracy of the order of ± 0.01 mm, even for articles of fairly large size, to eliminate a need for adjustment at the time of mounting the mirror. In this embodiment, the housing incorporating various components of the exposure optical system is integrally formed from resins, a projection lens mounting portion and a mirror mounting portion are provided on a shield box formed integrally with the housing, with three projecting seat bosses on which the mirror is placed.

In another embodiment, a downwardly-open shield box is integrally formed from resin with the housing incorporating components of the exposure optical system, and the bottom of the shield box is covered with a withdrawable shield plate thereby to prevent contamination and diffused reflection within the shield box.

In yet another embodiment of this invention, the desired positioning of the optical axis is achieved simply by mounting the resin-made housing for the exposure optical system onto the machine frame. The machine frame is formed with a positioning standard face in parallel to the optical axis of the projection lens, the positioning standard face is brought into abutment with the corresponding face formed on the housing, whereby to attain the desired relationship between the machine frame and the housing, and then both members are fixed to each other.

Further features of this invention will be apparent from the following description with reference to the accompanying drawings, in which:

Fig. 1 is an exploded perspective view of an electrophotographic reproducing machine according to this invention;

Fig. 2 is a longitudinal sectional view of the reproducing machine shown in Fig. 1 in the completely assembled state;

Fig. 3 is an exploded view of a current collector;

Fig. 4 is a view for explaining an assembling method of a current collecting brush;

Fig. 5 is an exploded view showing the relationship between a housing for an exposure optical system and a glass plate supporting plate;

Fig. 6 is an exploded perspective view of a lens mounting portion;

Fig. 7 is a front view of the lens mounting portion in the assembled state;

Fig. 8 is an exploded perspective view of a mirror mounting portion;

Fig. 9 is a sectional view taken along the line A—A in Fig. 8; and

Fig. 10 is an explanatory view showing a positioning portion for the housing.

A machine frame A of the electrophotographic reproducing machine has an upwardly-open box-like structure, which comprises a pair of opposed end plates 1A and 1B and another pair of side plates 2A and 2B mounted on the end plates 1A and 1B.

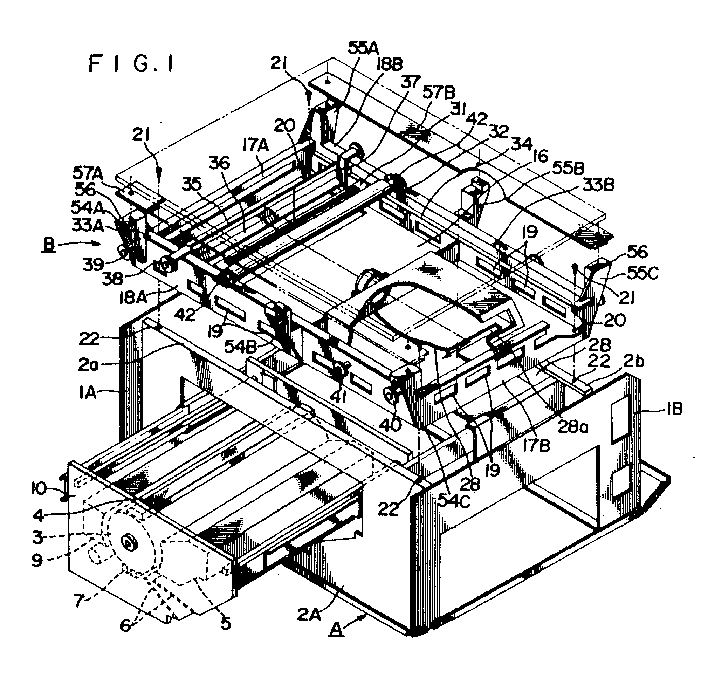

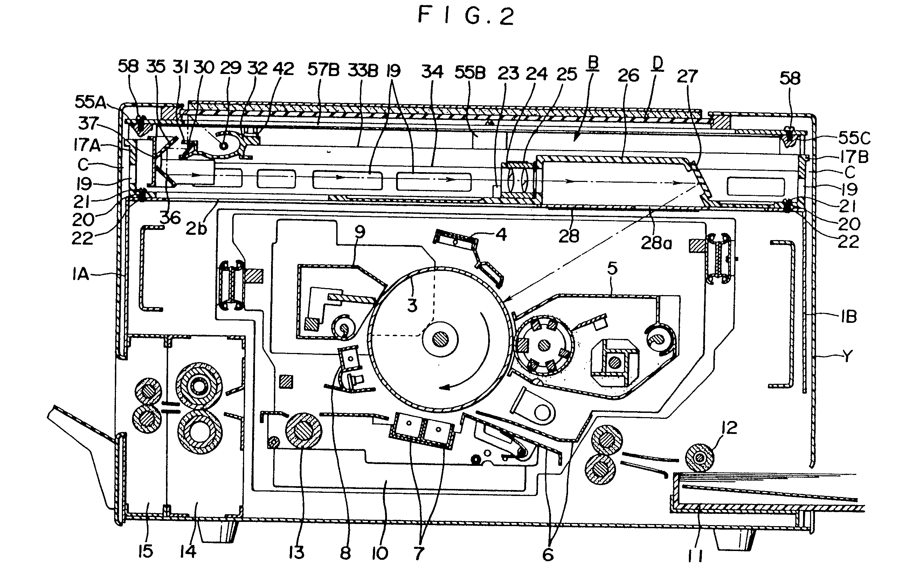

As shown in Fig. 2, a photosensitive drum 3, driven to rotate in the direction shown by the arrow, is mounted at the centre of the machine frame A. Around the photosensitive drum 3, there are disposed in appropriate order in the direction of rotation of the drum a plurality of process units such as a charging electrode 4, a magnetic brush developing unit 5, transfer paper guide plates 6, a transfer paper separation electrode 7, a charge eliminating electrode 8, and a cleaning device 9. These process units are mounted on a frame member 10 which is withdrawable from the machine frame A, as shown in Fig. 1. Reference numerals 11, 12, 13, 14 and 15, respectively, designate a paper feeding cassette, paper feeding roller, conveyance roller, fixing unit and a paper discharging roller unit.

The side plates 2A and 2B have upper flanges 2a and 2b which are inwardly bent at right angles and a housing B, integrally formed into a dish-like shape from heat insulating resin, is mounted on the upper flanges 2a and 2b. By way of example, the housing B is preferably formed in such a manner that a foamable resin, in very small amount with respect to the capacity of a mould cavity, is first injected into the cavity, then highpressure gas is blown into the cavity to harden the resin surface within the cavity, and then the gas is removed to allow foaming of the resin. By this method, it is possible to produce a housing which is light in weight, has a high level of thermal insulation and ensures precise dimensions without shrinkage during the cooling process.

The housing B comprises a substantially rectangular bottom wall 16, a pair of end walls 17A, 17B and a pair of side walls 18A, 18B surrounding the four sides of the bottom wall 16. A plurality of vent holes 19 are formed in those end walls 17A, 17B and side walls 18A, 18B, while mounting holes 20 are formed at the four corners of the bottom wall 16. Mounting screws 21 passing through the mounting holes 20 are screwed into threaded holes 22 formed in the upper flanges 2a, 2b, whereby to fix the housing B to the machine frame A. Therefore, in the assembled state the vent holes 19 communicate with a space C between a machine housing Y and the machine frame A, as shown in Fig. 2, thereby permitting convection of air or ventilation within the machine, including the interior of the housing B, so as to prevent overheating of the exposure optical system.

A projection lens mounting seat 23 is integrally formed at the centre of the bottom wall 16 of the housing B, and a projection lens 24 is mounted on the mounting seat 23 using a V-shaped band 25. Moreover, an upwardly projecting shield box 26 is integrally formed at a portion near one end of the bottom wall 16, and a mirror 27 directed towards the peripheral surface of the photosensitive drum 3 is fixed at the end face of the shield box 26 on the side opposite to the projection lens 24. Further, the bottom of the downwardly open shield box 26 is covered with a small-sized shield plate 28 which is withdrawable and has a slit 28a.

Both side walls 18A, 18B of the housing B have their upper faces constituting guide rail surfaces 33A, 33B, respectively, on which are rested both end portions of a first movable mount 32, for an exposure lamp 29, a mirror 30 and a slit plate 31. On the other hand, both end portions of a second movable mount 37 for a pair of mirrors 35 and 36, disposed to cross at right angles, are supported on and guided by guide rail surfaces 34 of both side walls 18A, 18B which are positioned below and inside of the guide rail surfaces 33A, 33B.

As is conventional, a wire (not shown) runs around the end portion of the first movable mount 32, a loose pulley 38 at the end of the second movable mount 37, fixed pulleys 39, 40 at both ends of the side wall 18A or 18B, and a relay pulley 41 at the intermediate portion of the side wall 18A or 18B on each side. By means of this wire, the first movable mount 32 can be moved at a constant speed, while the second movable mount 37 is moved at a speed half that of the first movable mount 32.

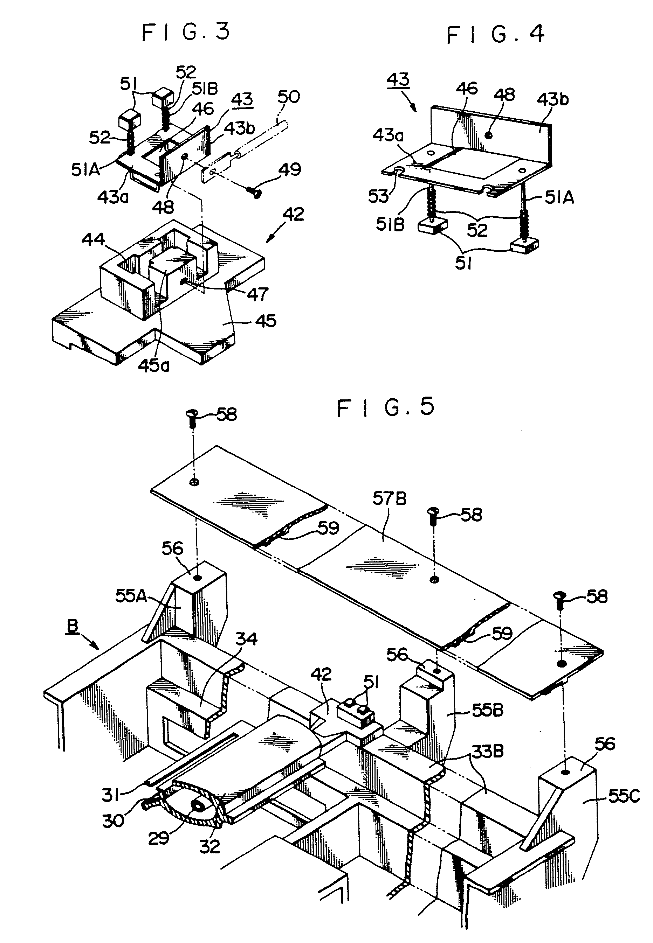

A pair of current collectors 42 as shown in Fig. 3 are fixed at end portions of said first movable mount 32 for feeding current to the exposure lamp 29. More specifically, each of the current collectors 42 includes a resin insulation block 45 with an accommodation hole 44 which can receive a bottom portion 43a of an L-shaped current supplying metal plate 43. The insulation block 45 is integrally formed with a vertical block 45a into which can be fitted a rectangular opening 46 in the bottom plate portion 43a. The vertical block 45a has a threaded hole 47 on its side face and a fixing screw 49 is screwed into the threaded hole 47 through an opening 48 in a side plate portion 43b, so that the plate 43 is fixed to the insulation block 45. Further, a power supply cord 50 for the exposure lamp 29 is connected to the side plate portion 43b, and is fixed thereto by means of the fixing screw 49.

Proximal portions of a pair of lead wires or bars 51A, 51B, each having a current collecting brush 51 fixed at its head portion are soldered to the current applying metal plate 43, at two side positions near the side plate portion 43b, with coil springs 52 fitted around those bars, as illustrated in Fig. 4. Then, while compressing the coil springs 52, the lead bars 51A, 51B are bent into the shape illustrated in Fig. 3, the intermediate portions thereof being fitted into keyhole-like slots 53 formed in the bottom plate portion 43a at positions opposite the side plate portion 43b.

It should be noted that each current collecting brush 51 has a tendency to move upwards urged by the coil spring 52 in the thus assembled state.

As will be seen from Figs. 1 and 2, two groups, each of three posts 54A, 54B, 54C and 55A, 55B, 55C, projecting upwards from the respective side walls 18A and 18B, are formed integrally with both end portions and the intermediate portions of two side walls 18A, 18B of the housing B. As illustrated in Fig. 5, the two groups of posts 54A, 54B, 54C and 55A, 55B, 55C are disposed at positions biased in the widthwise direction of the housing B so as not to lie on a straight line in the horizontal plane, but having respective top faces, i.e. seat faces 56, positioned on the same horizontal plane. Then a pair of glass-mounting plates 57A and 57B are fixed on the posts 54A, 54B, 54C, 55A, 55B and 55C by means of mounting screws 58, so as to be positioned above the current collectors 42. Each of the plates 57A and 57B is a long and narrow flat plate formed from an electrically insulating resin. As will be seen from the exploded view of Fig. 5, a glass mounting plate includes, at its bottom surface, a buried flat electrode plate 59 with which each current brush 51 comes into sliding-contact, so that power is fed to the exposure lamp 29 through the electrode plate 59. Besides, a document glass D is placed and fixed between the pair of glass mounting plates 57A and 57B so as to cover the bottom of the housing B.

With this construction, the exposure optical system can be built up in a separate assembly line from that used for the machine frame A which incorporates therein the various process units. More specifically, the projection lens 24 and the mirror 27 are first mounted on the housing B, the previously completed movable mounts 32, 37 are arranged straddling the guide rail surfaces 33A, 33B and 34, and then the housing B is fixed to the machine frame A by the mounting screws 21. This ensures many advantages. The assembly line can be greatly reduced in length compared to the prior art. The bottom wall 16 of the housing B is formed of a heat insulating material, so that the photosensitive drum 3 may not deteriorate too early due to thermal radiation from the bottom wall 16. Further, because of the vent holes 19, the interior of the machine is well ventilated through the housing and hence the exposure optical system can be prevented from overheating.

Moreover, the housing B is integrally formed including the guide rail surfaces 33A, 33B and 34 for the movable mounts 32, 37, the mounting seat 23 for the projection lens 24, and the shield box 26 for shielding an optical path of the projection lens 24. Thus, the manufacturing costs of the exposure optical system can be greatly reduced compared to the prior art, while use of the housing B of this invention makes it possible to assemble the exposure optical system in a separate assembly line from that used for the machine frame A. Since the housing B is formed by moulding, unit costs are reduced and mass production will be greatly facilitated.

Furthermore, the current collecting brushes 51 are connected to the current supplying metal plate 43 through the lead bars 51A and 51B, whereby the coil springs 52 will not be fatigued by heating and the electrical connection is also stable, thus causing no noise. Thus, no discharge occurs between the coil spring 52 and the brush 51, and hence it is possible to prevent generation of an erroneous signal which could otherwise be sent to the control unit. There is the additional advantage that the current collector can be simply assembled by mounting the brushes 51 on the metal plate 43 and then incorporating it into the insulation block 45.

Moreover, since the electrode plate 59 is buried in each of the glass supporting plates 57A and 57B which are formed of an electrically insulating resin, the current collecting structure can be completed simply by mounting the glass supporting plates 57A and 57B on the housing B. It thus becomes possible to provide a well-insulating and safe current collecting structure which further permits reduction in the number of parts and a remarkable reduction in the number of assembling steps.

In addition, according to this invention, the groups of posts 54A, 54B, 54C, 55A, 55B and 55C have their seat faces 56 in parallel to the optical axis of the optical system, and each group of three posts is disposed not aligned on a straight line, but lying in the same horizontal plane, so that the glass mounting plates 57A and 57B may stably be mounted in parallel to the optical axis without failure. Therefore, it is possible completely to eliminate a need to adjust parallelism for the plate D on the glass mounting plates 57A and 57B.

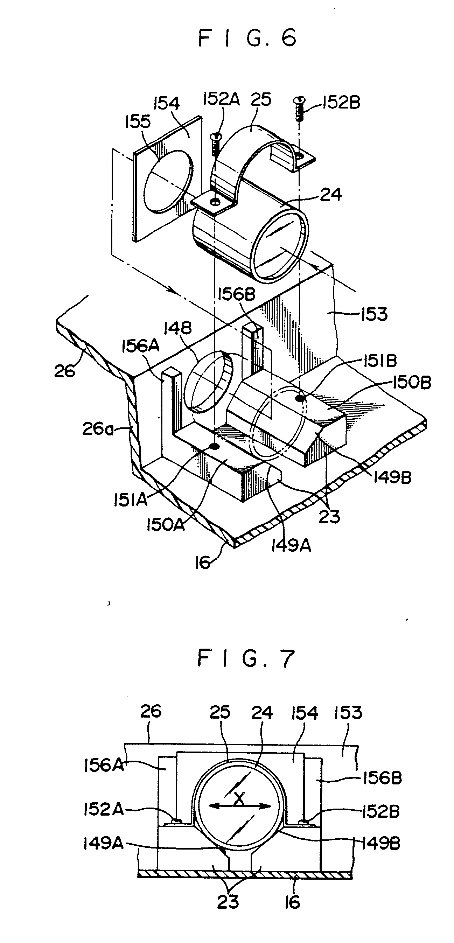

Figs. 6 and 7 show in detail a lens mounting structure according to this invention. A through hole 148 of relatively large diameter is bored at the centre of front wall 26a of the aforesaid shield box 26, while two projection lens mounting seats 23 are integrally formed on the bottom wall 16 on the upstream side of the through hole 148. The mounting seats 23 extend parallel to the central axis of the through hole 148 and have a pair of opposed faces 149A and 149B providing a V-shape in a plane at right angles to the central axis of the through hole 148. Threaded holes 151A and 151B are bored in horizontal seat faces 150A and 150B outside the respective receiving faces 149A and 149B. Then, fixing screws 152A and 152B are screwed into the threaded holes 151A and 151B through openings which are formed in the end portions of the semicircular retaining band 25.

Moreover, the projection lens 24 has a cylindrical shape as shown in Fig. 7, and it has high resolving power in the direction indicated by arrow X. When mounting the projection lens 24 on the seats 23, a rectangular spacer 154 of appropriate thickness is interposed between a vertical surface 153 of the front wall 26a and the end face of the projection lens 24, and has a central opening 155 corresponding to the through hole 148. A plurality of spacers of different thicknesses are prepared, and there is used that one of them which has a thickness corresponding to the gap between the vertical surface 153 and the end face of the projection lens 24. For the purpose of guiding and holding the spacer 154, a pair of guide walls 156A and 156B, with a space therebetween corresponding to the width of the spacer 154, are integrally formed on the surface of the front wall 26a.

With the above mentioned construction, the centre of the projection lens 24 can be made to coincide precisely with the optical axis of the exposure optical system just by placing the projection lens 24 on the receiving faces 149A and 149B of the projection lens mounting seats 23. In this state, the lens 24 is turned until the high resolving power direction X of the projection lens 24 becomes horizontal, that is, comes into parallel with a slit in the slit plate 31. Thereafter, the projection lens 24 is fixed to the mounting seats 23 using the holding band 25. In this way, the projection lens 24 ensures the best image within its potential range.

Since the focus adjusting structure according to this invention has the above mentioned construction, the centre of the projection lens 24 can be made precisely to coincide with the optical axis of the exposure optical system simply by placing the projection lens 24 on the receiving faces 149A and 149B, as previously noted. Focus-adjustment is carried out as follows. While observing the focused state, the projection lens 24 is moved along its optical axis on the receiving faces 149A and 149B, whereby to determine its preferred position.

Thereafter, a spacer 154 of appropriate thickness is interposed between the projection lens 24 and the front wall 26a, and then the projection lens 24 is fixed on the seats 23 using the band 25. At this time, the tightening force of the fixing screws 152A and 152B acts at right angles to the central axis of the projection lens 24, while the lens 24 is supported by the rigid seats 23, so that it is possible to avoid any shift in the focusing position, even during tightening. Also, since the projection lens 24 is rigidly fixed by the holding band 25, it will never subsequently lose focus.

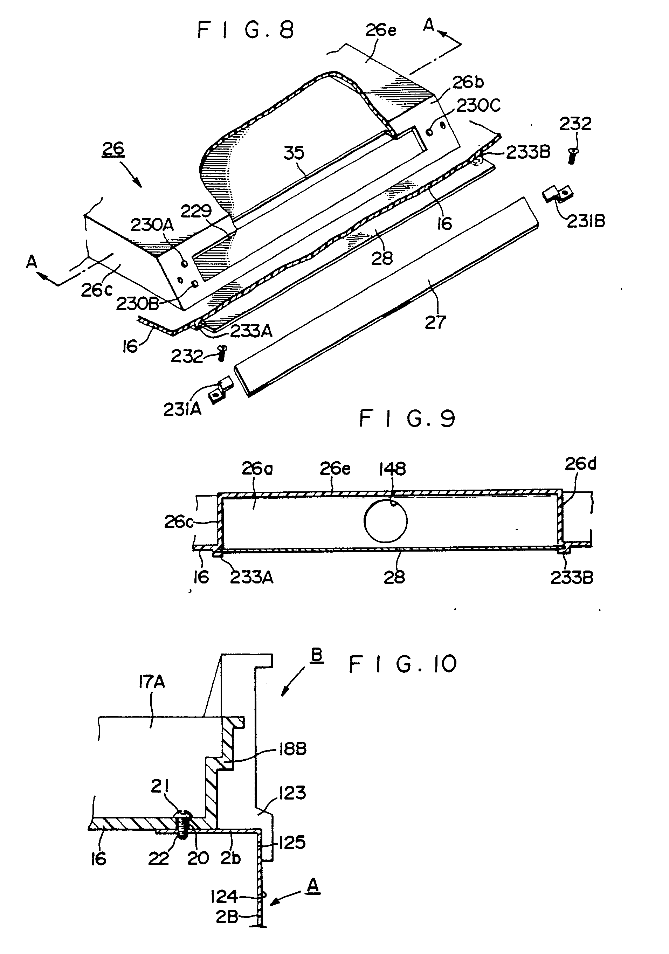

A downwardly-open shield box 26, as illustrated in Figs. 8 and 9, comprises a front wall 26a, a rear wall 26b and a pair of opposed side walls 26c, 26d, being raised upward from the bottom wall 16 to form a frame member, the upper side of which is covered with a top wall 26e. The front wall 26a has through hole 148 at its centre for introducing a light beam from the projection lens 24, as previously noted, while the inclined rear wall 26b opposite to the through hole 148 has an elongated rectangular opening 229 which extends in the widthwise direction and allows the reflection surface of the mirror 27 to be exposed to the interior of the shield box 26.

Three bosses 230A, 230B and 230C are integrally formed on the outer surface of the rear wall 26b, onto which is mounted the mirror 27, on each side of the rectangular opening 229. The mirror 27 is first seated on the distal ends of these bosses 230A, 230B and 230C and then fixed onto the rear wall 26b with the aid of locking fixtures 231A, 231B and fixing screws 232. A pair of guide pawls 233A and 233B are integrally formed on the lower surface of the bottom wall 16 at positions just below the side walls 26c and 26d. A shield plate 28 to cover the bottom of the shield box 26 is slidably supported between the guide pawls 233A and 233B. The shield plate 28 has the slit 28a which allows the reflected light beam from the mirror 27 to pass therethrough, so that the light beam from the projection lens 24 is focused on the peripheral surface of the photosensitive drum through the mirror 27 and the slit 28a.

According to this invention, as described above, since the mounting seats 23 and the rear wall 26b, serving as the mirror mounting surface can be formed precisely, the projection lens and the mirror can be mounted and fixed without the need for substantial adjustment. More specifically since three seating bosses 230A, 230B and 230C project on the mirror mounting surface of the shield box 26, and then the mirror 27 is seated on those bosses 230A, 230B and 230C, the mirror 27 can be mounted with no adjustment if those seating bosses 230A, 230B and 230C are precisely formed at proper positions with respect to the optical axis. Further, it is enough in this invention that the shield box 26 and the seating bosses 230A, 230B and 230C are formed integrally with the resin housing B. Thus, it becomes possible to attain a cheaper structure as a result of mass production.

In addition, the housing B of this invention has shield box 26 integrally formed on the bottom wall 16, so that the optical path of the projection lens 24 on the downstream side can be completely shielded from external light. Because of the presence of the shield plate 28, diffused light within the shield box 26 can be prevented from reaching the photosensitive drum 3. The shield plate 28 also serves to prevent floating toner within the machine from entering into the shield box 26. Further, even if the surface of the projection lens 24 facing the interior of the shield box 26 and the inner surface of the mirror 27 become contaminated, this contamination can be removed easily by sliding out the shield plate 28 from the shield box 26. Thus, maintenance is also remarkably facilitated.

Fig. 10 illustrates a positioning structure used when fixing the housing B onto the machine frame A, which structure embodies still another important feature. Sideways projecting L-shaped positioning hooks 123 are integrally formed at both end portions of the side wall 18B of the housing B. To allow adjustment of the position of the housing B with respect to the machine frame A, the aforesaid mounting holes 20 are made much larger than the diameter of the mounting screws 21, and the outer surface of the side plate 2B is made to serve as a positioning standard face 124 parallel to the optical axis of the projection lens. Thus, the desired relationship between the machine frame A and the housing B can be obtained just by fitting a vertical surface 125 of each positioning hook 123 to the positioning standard face 124 and then tightening the mounting screws 21 in threaded holes 22 in the upper flanges 2a and 2b.

With such a construction, the optical axis of the projection lens 24 can be made precisely parallel to the axis of the photosensitive drum 3 by bringing the vertical surface 125 of each positioning hook 123 into close contact with the positioning standard face 124 of the machine frame A. Therefore, the housing B can be assembled on the machine frame A, without the need for adjustment, by tightening the mounting screws 21, while holding the close contact.

## Claims

1. An electrophotographic reproducing machine with a housing (B) for an exposure optical system, which accommodates therein a slit plate (31) for scanning, an exposure lamp (29) and a projection lens (24), characterised in that the housing (B) is formed of heat insulating resin and has an integral dish-like form with vent holes (19) in its peripheral walls for promoting ventilation within said machine, its bottom portion (16) serving also as a heat insulating plate, the housing being mounted on an upwardly open machine frame (A) which accommodates therein a plurality of process units for reproducing, and in that a document glass (D) is mounted by means of glass-mounting plates (57A, 57B) at the top portion of said housing (B).

2. An electrophotographic reproducing machine according to Claim 1, characterised in that said housing (B) comprises guide rail surfaces (33A, 33b) for guiding movable mounts (32) of the optical system on both side walls (18A, 18B) of the housing (B) opposite to each other, a projection lens mounting seat (23) integrally formed substantially at the centre of the bottom wall (16) of said housing, and a shield box (26) raising upwardly from said bottom wall (16) formed integrally on said bottom wall (16) at a position adjacent to said projection lens mounting seat (23).

3. An electrophotographic reproducing machine according to Claim 1, characterised in that said housing (B) has a box-like shape.

4. An electrophotographic reproducing machine according to Claim 1, characterised in that a downwardly-open shield box (26), for shielding a light beam having passed through the projection lens (24) from external light is formed integrally with said housing (B), and the bottom side of said shield box (26) is covered with a withdrawable shield plate (28) whereby said shield plate (28) may be drawn out from said shield box (26) to allow cleaning of the reflection surface of a mirror (27) fixed on said shield box (26).

5. An electrophotographic reproducing machine according to Claim 1, characterised in that it further includes a positioning and fixing structure for said housing (B) such that said machine frame (A) is formed with a positioning standard face in parallel to the optical axis of said projection lens (24), said positioning standard face being brought into abutment with the corresponding face formed on said housing (B) whereby to attain the desired relationship between said machine frame (A) and said housing (B) and then both said members are fixed to each other.

6. An electrophotographic reproducing machine according to Claim 1, characterised in that two groups of three posts (54A, 54B, 54C, 55A, 55B, 55C) are provided at the upper portion of said housing (B), the top faces of said posts constituting a horizontal seating plane on which said top faces are positioned, the posts in each group not being aligned on a straight line, and each of said glass mounting plates (57A, 57B) is placed on and fixed to said seating plane.

7. An electrophotographic reproducing machine according to Claim 1, characterised in that it further includes a lens mounting structure such that threaded holes (151A, 151B) are bored in mounting seats (23) having a pair of receiving faces (149A, 149B) providing a V-shaped receiver for the peripheral wall of a cylindrical lens (24) rotatable about its optical axis, said cylindrical lens (24) being fixed in position by means of said threaded holes (151A, 151B) and a holding band (25).

8. An electrophotographic reproducing machine according to Claim 7, characterised in that an optical system adjusting structure with an adjusting spacer (154) is interposed between the mounting face on the stationary portion of said machine and the end face of said cylindrical lens (24).

9. An electrophotographic reproducing machine according to claim 1, characterised in that glass-mounting plates (57A, 57B) formed of electrically insulating resin are provided on both side portions of said housing (B) accommodating the exposure lamp (29), the slit plate (31) and the projection lens (24), an electrode plate (59) is attached to the bottom surface of each of said glass-mounting plates (57A, 57B) and current-collecting means (42) of movable mounts positioned just below said glass supporting plates (57A, 57B) are brought into sliding contact with said electrode plate (59).

10. An electrophotographic reproducing machine according to Claim 9, characterised in that said current collecting means (42) has a keyhole-like slot (53) formed at one side of a current supplying metal plate (43) to which is connected one end of a lead wire (51A, 51B), a current collecting brush (51) is fixed at the other end of said lead wire (51A, 51B) with a coil spring (52) fitted therearound, said lead wire (51A, 51B) is passed through said slot (53) with said coil spring (52) in its compressed state, and said current supplying metal plate (43) is incorporated in an insulation block (45).

## Patentansprüche

1. Elektrophotographisches Reproduktionsgerät (Vervielfältigungsgerät) mit einem Gehäuse (B) für ein optisches Belichtungssystem, das eine Schlitzplatte (31) für Abtastung, eine Belichtungslampe (29) und eine Projektionslinse (24) aufnimmt, dadurch gekennzeichnet, daß das Gehäuse (B) aus einem wärmeisolierenden Kunstharz geformt ist une eine (material)—einheitliche Form mit in seinen Umfangswänden vorgesehenen Belüftungsöffnungen (19) zur Begünstigung einer Ventilation innerhalb des Geräts aufweist und sein Bodenteil (16) auch als wärmeisolierende Platte dient, das Gehäuse auf einem oben offenen Geräterahmen (A) montiert ist, der eine Anzahl von verarbeitungseinheiten für Reproduktion aufnimmt, und daß eine Vorlagenglasscheibe (D) mit Hilfe von Scheiben-Halterungsplatten (57A, 57B) am oberen Abschnitt des Gehäuses (B) montiert ist.

2. Elektrophotographisches Reproduktionsgerät nach Anspruch 1, dadurch gekennzeichnet, daß das Gehäuse (B) Leitschienenflächen (33A, 33B) zum Führen von bewegbaren Trägern (32) des optischen Systems an beiden, einander gegenüberstehenden Seitenwänden (18A, 18B) des Gehäuses (B), einen im wesentlich im Mittelbereich der Bodenwand (16) des Gehäuses materialeinheitlich angeformten Projektionslinsen-Tragsitz (23) und einen von der Bodenwand (16) aufwärts abgehenden, in einer Position neben dem Projektionslinsen-Tragsitz (23) materialeinheitlich an der Bodenwand (16) angeformten Abschirmkasten (26) aufweist.

3. Elektrophotographisches Reproduktionsgerät nach Anspruch 1, dadurch gekennzeichnet, daß das Gehäuse (B) eine kastenförmige Gesalt aufweist.

4. Elektrophotographisches Reproduktionsgerät nach Anspruch 1, dadurch gekennzeichnet, daß ein unterseitig offener Abschirmkasten (26) zum Abschirmen eines durch die Projektionslinse (24) hindurchgetretenen Lichtstrahls gegenüber dem Außenlicht materialeinheitlich mit dem Gehäuse (B) ausgebildet ist und die Bodenseite des Abschirmkastens (26) mit einer zurückziehbaren Abschirmplatte (26) abgedeckt ist, wobei die Abschirmplatte (28) zur Ermöglichung eines Reinigens der Reflexionsfläche eines am Abschirmkasten (26) befestigten Spiegels (27) aus dem Abschirmkasten (26) herausziehbar ist.

5. Elektrophotographisches Reproduktionsgerät nach Anspruch 1, dadurch gekennzeichnet, daß es weiterhin eine Positionier- und Befestigungskonstruktion für das Gehäuse (B) aufweist, derart, daß der Geräterahmen (A) mit einer Positionier-Normalfläche parallel zur optischen Achse der Projektionslinse (24) ausgebildet ist, (und) die Positionier-Normalfläche in Anlage gegen die entsprechende, am Gehäuse (B) ausgebildete Fläche bringbar ist, um damit die gewünschte Beziehung zwischen dem Geräterahmen (A) und dem Gehäuse (B) erzielen, worauf beide Teile gegeneinander befestigbar sind.

6. Elektrophotographisches Reproduktionsgerät nach Anspruch 1, dadurch gekennzeichnet, daß am oberen Abschnitt des Gehäuses (B) zwei Gruppen von drei Stützen (54A, 54B, 54C, 55A, 55B, 55C) vorgesehen sind, deren Oberseiten eine waagerechte Auflageebene, auf der die Oberseiten positioniert sind, darstellen, die Stützen in jeder Gruppe nicht auf einer geraden Linie (aufeinander) ausgerichtet sind und jede der Scheiben-Halterungsplatten (57A, 57B) auf die Auflageebene aufgelegt und daran befestigt ist.

7. Elektrophotographisches Reproduktionsgerät nach Anspruch 1, dadurch gekennzeichnet, daß es weiterhin eine Linsen-Halterungskonstruktions aufweist, bei welcher Gewindebohrungen (151A, 151B) in Tragsitzen (23) mit zwei Aufnahmeflächen (149A, 149B) ausgebildet sind, die eine V-förmige Aufnahme für die Umfangswand einer um ihre optische Achse drehbaren zylindrischen Linse (24) bilden, und die zylindrische Linse (24) mit Hilfe der Gewindeborhungen (151A, 151B) und eines Spann- oder Haltebands (25) in ihrer Lage festgelegt ist.

8. Elektrophotographisches Reproduktionsgerät nach Anspruch 7, dadurch gekennzeichnet, daß eine Optiksystem-Justierkonstruktion mit einem Justierabstandstück (154) zwischen die Auflagefläche am feststehenden Abschnitt des Geräts und die Stirnfläche der zylindrischen Linse (24) eingefügt ist.

9. Elektrophotographisches Reproduktionsgerät nach Anspruch 1, dadurch gekennzeichnet, daß Scheiben-Halterungsplatten (57A, 57B) aus einem elektrisch isolierenden Kunstharz an beiden Seitenabschnitten des die Belichtungslampe (29), die Schlitzenplatte (31) und die Projektionslinse (24) aufnehmenden Gehäuses (B) vorgesehen sind, eine Elektrodenplatte (59) an der Bodenfläche jeder Scheiben-Halterungsplatte (57A, 57B) angebracht ist und Stromkollektormittel (42) mit (auf) bewegbaren, unmittelbar unter den Scheiben-Halterungsplatten (57A, 57B) angeordneten Halterungen in Schleifkontakt mit der Elektrodenplatte (59) bringbar sind.

10. Elektrophotographisches Reproduktionsgerät nach Anspruch 9, dadurch gekennzeichnet, daß die Stromkollektormittel (42) einen schlüssellochförmigen Schlitz (53) an der einen Seite einer Stromzufuhr-Metallplatte (43), mit welcher das eine Ende einer Zuleitung (51A, 51B) verbunden ist, aufweisen, am anderen Ende der Zuleitung (51A, 51B) eine Stromkollektorbürste (51) mit einer um diese ' herumgelegten Schraubenfeder (52) befestigt ist, die Zuleitung (51A, 51B) mit zusammengedrückter Schraubenfeder (52) durch den Schlitz (53) hindurchgeführt ist und die Stromzufuhr-Metallplatte (43) in einen Isolierblock (45) einbezogen (eingebettet) ist.

## Revendications

1. Appareil de reproduction électrophotographique avec un réceptacle (B) pour un système optique d'exposition, qui contient à l'intérieur une plaque fendue (31) pour le balayage, une lampe d'exposition (29) et une lentille de projection (24), caractérisé en ce que le réceptacle (B) est formé en résine isolante de la chaleur et présente une forme d'ensemble d'un seul tenant semblable à une cuvette avec des trous de ventilation (19) dans ses parois périphériques pour faciliter la ventilation à l'intérieur de l'appareil, sa partie de fond (16) servant également de plaque isolante de la chaleur le réceptacle étant monté sur un châssis (A) ouvert vers le haute recevant à l'intérieur plusieurs unités de traitement pour la reproduction et en ce qu'un verre à document (D) est monté au moyen de plaques de montage de verre (57A, 57B) à la partie supérieure dudit réceptacle (B).

2. Appareil de reproduction électrophotographique selon la revendication 1, caractérisé en ce que ledit réceptacle (B) comprend des surfaces formant rails de guidage (33A, 33B) destinées à guider des montures mobiles (32) du système optique sur les deux parois latérales (18A, 18B) du réceptacle (B) qui sont à l'opposé l'une de l'autre, un siège de montage (23) pour une lentille de projection formé d'un seule tenant sensiblement au centre de la paroi de fond (16) dudit réceptacle, et une boîte écran (26) s'élevant vers le haute à partir de ladite paroi de fond (16) st formée d'un seul tenant sur ladite paroi de font (16) dans une position adjacente audit siège de montage (23) de la lentille de projection.

3. Appareil de reproduction électrophotographique selon la revendication 1, caractérisé en ce que ledit réceptacle (B) a la forme d'une boîte.

4. Appareil de reproduction électrophotographique selon la revendication 1, caractérisé en ce qu'une boîte écran (26) ouverte vers le bas et destinée à protéger un faisceau lumineux qui a traversé la lentille de projection (24) vis-à-vis de la lumière extérieure est formée d'un seul tenant avec ledit réceptacle (B), et le côté inférieur de ladite boîte écran (26) est recouvert d'une plaque écran amovible (28), ladite plaque écran (28) pouvant être retirée de ladite boîte écran (26) pour permettre le nettoyage de la surface de réflexion d'un miroir (27) fixé sur ladite boîte écran (26).

5. Appareil de reproduction électrophotographique selon la revendication 1, caractérisé en ce qu'il comprend en outre une structure de positionnement et de fixation pour ledit réceptacle (B) tel que le châssis (A) de l'appareil comprenne une face de positionnement de référence parallèle à l'axe optique de ladite lentille de projection (24), ladite face de positionnement de référence étant amenée en butée contre la face correspondante constituée sur ledit réceptacle (B) de manière à obtenir la relation désirée entre ledit châssis (A) de l'appareil et ledit réceptacle (B), lesdits daux éléments étant ensuite fixés l'un à l'autre.

6. Appareil de reproduction électrophotographique selon la revendication 1, caractérisé en ce que deux groupes de trois supports (54A, 54B, 54C, 55A, 55B, 55C) sont prévus à la partie supérieure dudit réceptacle (B), les faces supérieures desdits supports constituant un plan d'assise horizontale sur lequel sont positionnées lesdites faces supérieures, les support de chaque groupe n'étant pas alignés sur une même ligne droite et chacune desdites plaques de montage de verre (57A, 57B) est placée sur et fixé audit plan d'assise.

7. Appareil de reproduction électrophotographique selon la revendication 1, caractérisé en ce qu'il comprend en outre une structure de montage de lentille telle que des trous taraudés (151A, 151B) soient percés dans des sièges de montage (23) comportant deux faces de réception (149A, 149B) fournissant un logement en forme de V pour la paroi périphérique d'une lentille cylindrique (24) pourvant tourner autour de son axe optique, ladite lentille cylindrique (24) étant fixée en position au moyen desdits trous taraudés (151A, 151B) et d'une bande de retenue (25).

8. Appareil de reproduction électrophotographique selon la revendication 7, caractérisé en ce qu'une structure de réglage de système optique avec un élément d'écartement de réglage (154) est interposée entre la face de montage sur la partie fixe dudit appareil et la face d'extrémité de ladite lentille cylindrique (24).

9. Appareil de reproduction électrophotographique selon la revendication 1, caractérisé en ce que lesdites plaques de montage de verre (57A, 57B) qui sont formées en une résine électriquement isolante sont prévues sur les deux parties latérales dudit réceptacle (B) qui reçoit la lampe d'exposition (29), la plaque fendue (31) et la lentille de projection (24), une électrode en plaque (59) est fixée à la surface de fond de chacune desdites plaques de montage de verre (57A, 57B) et des moyens collecteurs de courant (42) à montures mobiles disposées juste au-dessous desdites plaques de support de verre (57A, 57B) sont amenés en contact par glissement avec ladite électrode en plaque (59).

10. Appareil de reproduction électrophotographique selon la revendication 9, caractérisé en ce que lesdits moyens collecteurs de courant (42) comprennent une fente en trou de serrure (53) formée sur un côté d'une plaque métallique d'alimentation de courant (43) à laquelle est reliée une extrémité d'un fil conducteur (51A, 51B), un balais collecteur de courant (51) est fixé à l'autre extrémité dudit fil conducteur (51A, 51B), avec un ressort à boudin (52) disposé autour, ledit fil conducteur (51A, 51B) est passé par ladite fente (53) alors que ledit ressort à boudin (52) est comprimé, et ladite plaque métallique d'alimentation de courant (43) est incorporée dans un bloc d'isolement (45).

F I G. I

0 092 326

# FIG. 2

0 092 326

FIG.3

FIG.4

FIG.5

## F I G. 6

## F I G. 7

4

0 092 326

FIG.8

26e

A

26b

230C

26

35

233B

230A  229

16

A

28

26c  230B

231B

16

27

232

233A

231A

FIG.9

26a    26e    148    26d

26c

16  233A         28        233B

B   FIG.10

17A

18B

123

21

125

16    22  20  2b

124

2B    A

5